# EUROPEAN PATENT APPLICATION

(11) **EP 2 092 866 A1**
(43) Date of publication of application: **26.08.2009**
(21) Application number: 09001985.2
(22) Date of filing: 12.02.2009
(51) Int. Cl.: A47J 37/07

(54) **Barbecue Grill**

(30) Priority: 20.02.2008 JP 2008038764
(71) Applicant: Shinfuji Burner Co., Ltd., Mito-cho Toyokawa-shi Aichi (JP)
(72) Inventor: Yamamoto, Akira, Gamagori-shi Aichi (JP)
(74) Representative: Grünecker, Kinkeldey, Stockmair & Schwanhäusser Anwaltssozietät

(57) **Abstract**

A barbecue grill includes a pot-shaped grill body and a pan supporting the grill body. The grill body is formed with air holes arranged along the bottom edge thereof at angular intervals of 90°. The pan is formed with protrusions arranged along its edge at angular intervals of 90°. During burning, the grill body is placed on the pan such that the air holes are located between the adjacent protrusions, respectively. In this state, the air holes are open, so that air can be easily taken in. To extinguish fire, the grill body is horizontally turned relative to the pan until the air holes are hermetically closed by the respective protrusions, and a lid is placed on the grill body. In this state, air supply into the grill completely stops, so that fire can be extinguished quickly.

## Description

### BACKGROUND OF THE INVENTION

This invention relates to a barbecue grill of the type in which burning fuel such as charcoal can be quickly extinguished.

Barbecue grills include an open-topped grill body. Fuel such as charcoal is placed in the grill body and burned to cook food on a gridiron or an iron plate placed on the open top of the grill body. Since the fuel consumes a large amount of air when burned, air holes are formed in the bottom or side of the grill body to introduce air into the grill body through the air holes, thereby stably burning the fuel (see, for example, JP Patent Publication 2002-142996A (Numeral 13; Fig. 1).

Fuel used for barbecue grills tends to keep burning for a prolonged period of time, and thus it takes a long time until the fire is extinguished spontaneously. This makes it impossible to store the barbecue grill soon after use. In order to solve this problem, a barbecue grill has been proposed which includes a sliding door for closing an air hole so that fire can be extinguished forcedly by closing the air hole with the sliding door.

This sliding door comprises a plurality of component parts, so that the use of such a sliding door increases the manufacturing cost of the grill. Also, because the grill body is heated to a high temperature during use of the barbecue grill, the component parts provided on the grill body tend to suffer thermal deformation. If the door is thermally deformed, the door cannot be smoothly opened and closed, thus making it difficult to hermetically close the air hole with the door.

An object of the present invention is to provide a barbecue grill having a simple means capable of reliably closing an air hole for extinguishing fire, while ensuring passage of sufficient amount of air through the air hole during burning.

### SUMMARY OF THE INVENTION

In order to achieve this object, the present invention provides a barbecue grill comprising a pot-shaped grill body having an open top and formed with an air hole, and a pan having a protrusion, wherein the grill body can be placed on the pan such that the protrusion is received in the air hole, the protrusion and the air hole being sized such that when the protrusion is received in the air hole, the air hole is hermetically closed by the protrusion, and wherein the grill body can be turned horizontally relative to the pan and placed on the pan such that the air hole is circumferentially displaced from the protrusion and thus open.

Fuel such as charcoal is placed in the grill body and is burned in the grill body. During burning, a large amount of air is needed. Fresh air is taken in through the air holes formed in the grill body. Instead of the single air holes, a plurality of such air holes may be formed so that air can be more effectively taken in.

By closing the air hole with the protrusion formed on the pan after use, air cannot be taken into the grill, so that fire can be extinguished quickly.

With this arrangement, the air hole is selectively closed and opened by horizontally turning the grill body relative to the pan, no component parts are necessary other than the grill body and the pan. Thus, the barbecue grill according to this invention is simple in structure, and can be manufactured at a low cost. Because the grill body and the pan have sufficient strength (e.g. have a sufficient thickness) so as not to suffer thermal deformation, it is possible to prevent the air hole from being insufficiently closed or opened due to thermal deformation of the component parts.

In a specific arrangement, a plurality of the air holes are arranged along a bottom edge of the grill body at predetermined angular intervals, and a plurality of the protrusions are arranged along an edge of the pan at the predetermined angular intervals, wherein the grill body can be turned horizontally relative to the pan by half the predetermined angular interval from the position where the protrusions are received in the respective air holes and placed on the pan such that the respective air holes are open to outside through gaps between the adjacent protrusions.

The predetermined angular intervals are preferably an integer factor of 360°, such as 90° or 120°. With this arrangement, air can be taken in uniformly, so that air is distributed uniformly to the entire fuel in the grill body. This ensures stable burning of the fuel.

If the air holes and the protrusions are arranged at angular intervals of 90°, by horizontally turning the grill body relative to the pan by half the above angular intervals, i.e. 45°, the air holes can be opened or closed.

The barbecue grill may further comprise a lid for closing the open top of the grill body, thereby preventing passage of air through the open top.

The lid prevents passage of air through the open top of the grill body when the passage of air through the bottom of the grill body is prevented, fire can be more quickly extinguished after use.

According to this invention, since the air hole is selectively closed and opened according to the angular position of the grill body relative to the pan when the grill body is placed on the pan, the grill according to the invention is simple in structure, and still, it is possible to reliably close the air hole when extinguishing fire, while ensuring passage of sufficient amount of air through the air hole during burning. The barbecue grill according to the present invention can thus be manufactured at a low cost. It is also possible to prevent the air hole from being insufficiently closed or opened due to thermal deformation of the component parts.

### BRIEF DESCRIPTION OF THE DRAWINGS

Other features and objects of the present invention will become apparent from the following description made with reference to the accompanying drawings, in which:
Fig. 1 is a perspective view of a barbecue grill according to the present invention;
Fig. 2 is a side view thereof;
Fig. 3 is an exploded perspective view thereof;
Fig. 4 is a side view thereof, showing the state in which the air holes are open;
Fig. 5 is a perspective view thereof during use;
Fig. 6 is a side view thereof during use;
Fig. 7 is a sectional side view thereof during use;
Fig. 8 is a perspective view thereof, showing a different state of use;
Fig. 9 is a perspective view of the entire barbecue grill; and
Fig. 10 is a sectional side view of the barbecue grill according to the present invention, showing the state during storage.

### DETAILED DESCRIPTION OF THE PREFERRED EMBODIMENTS

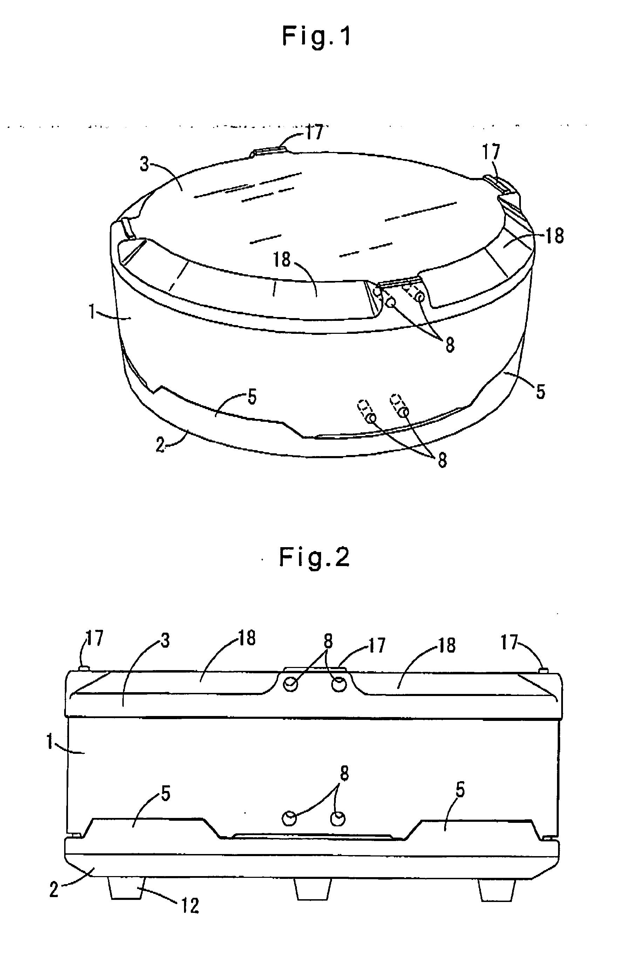

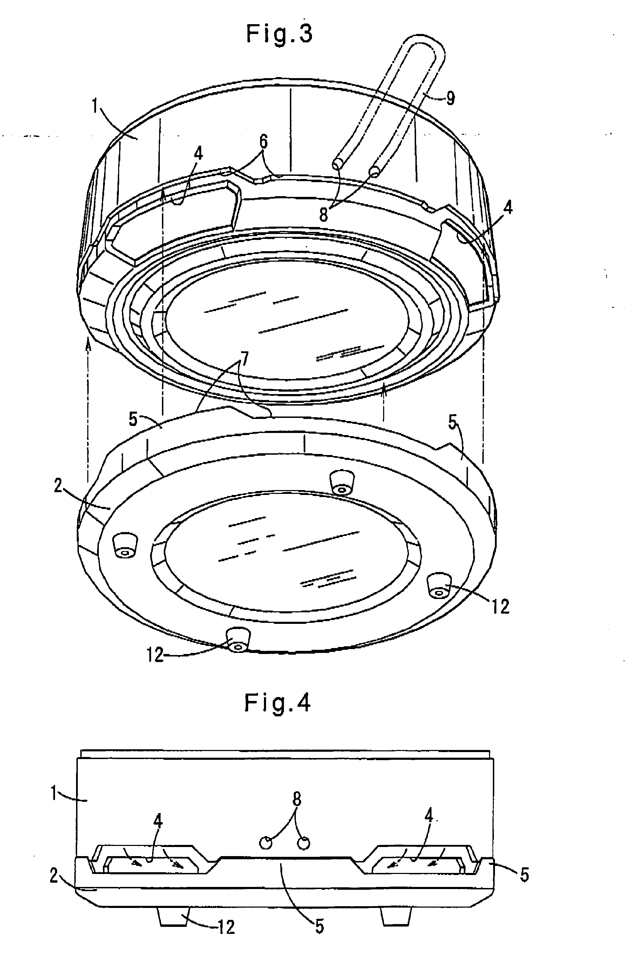

Figs. 1 to 3 show a barbecue grill according to the present invention. This barbecue grill comprises a pot-shaped, open-topped grill body 1, a pan 2 on which the grill body 1 is placed, and a lid 3 for closing the top opening of the grill body 1. As shown in Fig. 3, along the edge of the bottom of the grill body 1, air holes 4 are formed at angular intervals of 90°. Along the edge of the pan 2, protrusions 5 are formed at angular intervals of 90°. When the grill body 1 is placed properly on the pan 2, the protrusions 5 are received in the respective air holes 4, thus hermetically closing the air holes 4 such that air is not passable therethrough.

The side wall of the grill body 1 has a bottom edge extending the entire circumference thereof and comprising a plurality of steps 6. The pan 2 has a top edge 17 comprising a plurality of steps that engage the steps 6, thereby stably supporting the grill body 1.

When using the barbecue grill, the grill body 1 is horizontally turned by 45° from the position where the protrusions 5 of the pan 2 are received in the respective air holes 4 so that the air holes 4 are located between the respective adjacent protrusions 5 (see Fig. 4). In this state, the air holes 4 are now open, so that air can be easily introduced into the grill body (as shown by the arrows of Fig. 4). Two pairs of holes 8 are formed in the side wall of the grill body 1 at its diametrically opposite positions, respectively. By inserting handles 9 into the respective pairs of holes 8, the grill body 1 can be easily and safely lifted from the pan and turned even while the grill body 1 is hot.

Similarly, two pairs of holes 8 are formed in the lid 3 at its diametrically opposite positions. By inserting the handles 9 into the respective pairs of holes 8 formed in the lid 3, the lid can be easily and safely removed from the grill body 1 or turned over.

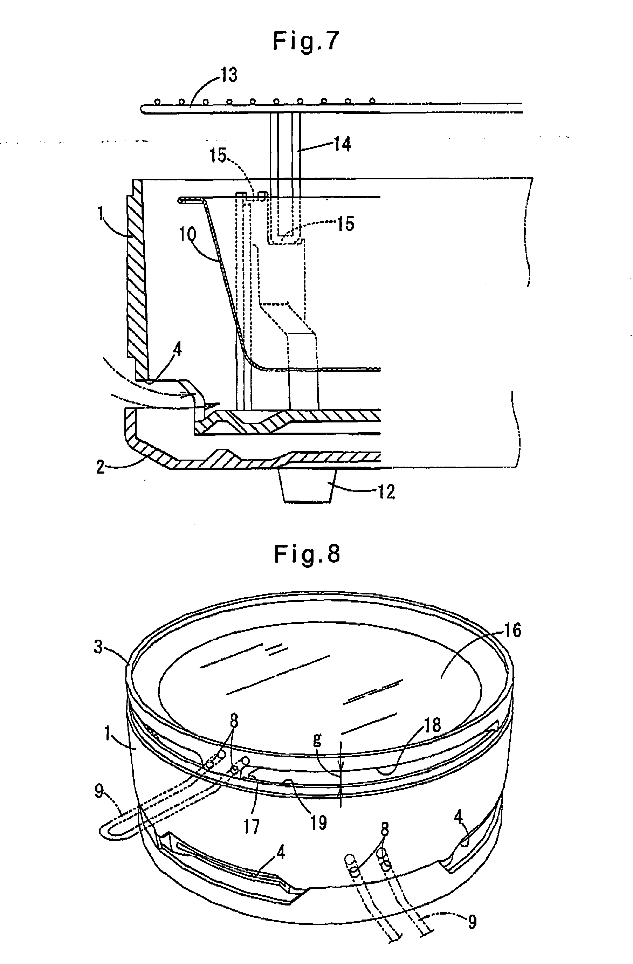

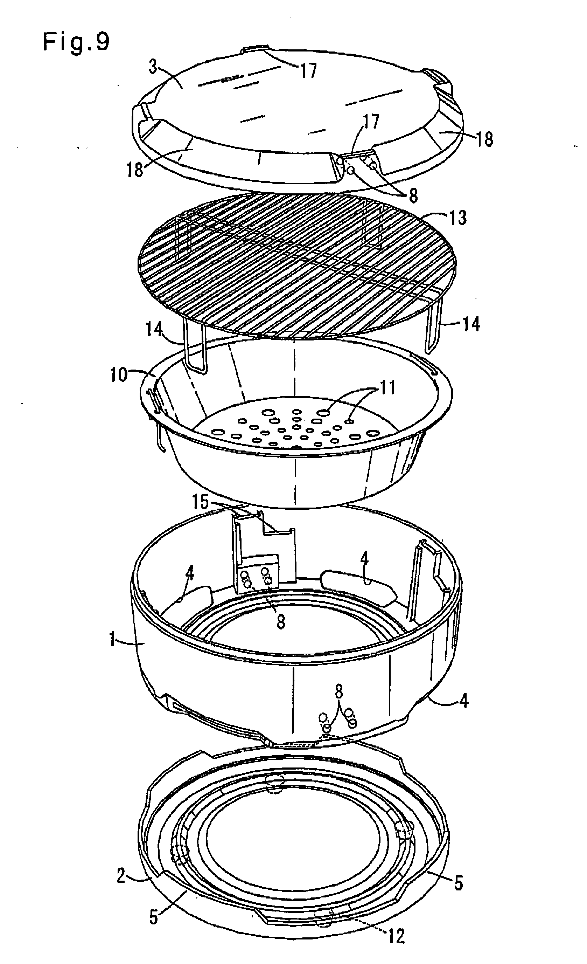

Fuel such as charcoal may be directly placed in the grill body 1, or may be placed on a charcoal support 10 set in the grill body 1 as shown in Figs. 7 and 9. A plurality of through holes 11 are formed in the bottom of the charcoal support 10 so that air is supplied to the fuel on the support 10 through the air holes 4 formed in the grill body 11 and the through holes 11. By using the charcoal support 10, burnt residue can be easily removed together with the charcoal support 10 after use.

When the fuel is burned in the grill body 1, the grill body 1 is heated to a high temperature. But since the grill body 1 is placed on the pan 2, the pan 2 prevents downward heat transfer. The barbecue grill of this invention can thus be used on e.g. a table that is not very heat resistant. Rubber legs 12 are provided on the bottom of the pan 2, thereby separating the pan 2 from e.g. a table on which the barbecue grill is placed. This further reduces heat transfer to the table.

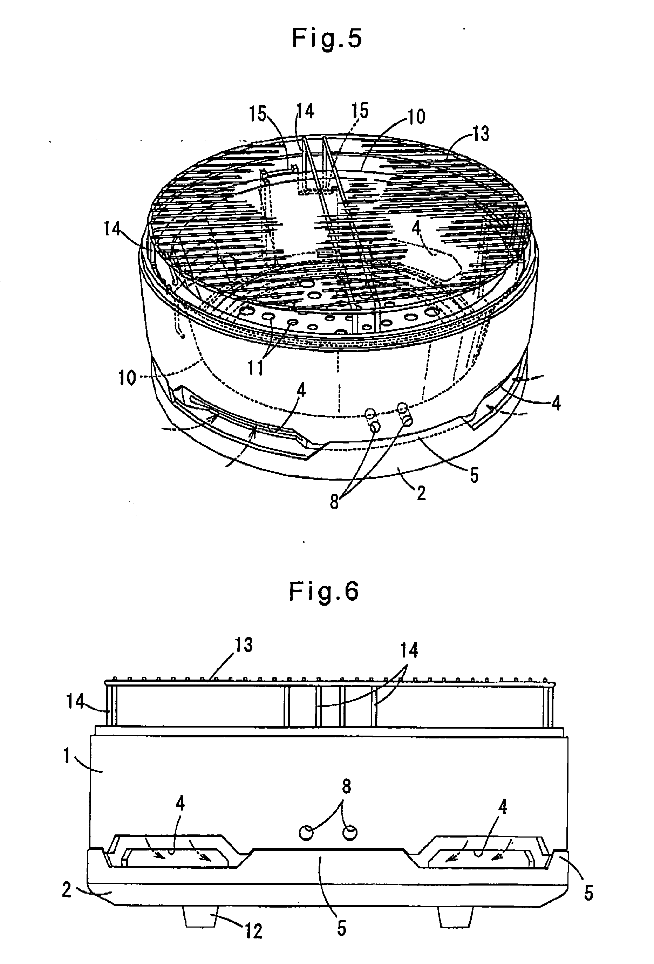

As shown in Figs. 5 to 7, food may be cooked on a gridiron 13 set in the grill body 1. The gridiron 13 has legs 14 (see Figs. 5 and 7). On the inner wall of the grill body 1, steps of different heights are formed. By bringing the legs 14 into engagement with the steps of a desired height, it is possible to adjust the height of the gridiron 13 in a stepwise manner.

As shown in Fig. 8, the back side 16 of the lid 3, which is made of iron, can be used as a cooking surface. The lid 3 has support portions 17 along the edge of the front surface thereof. Between the adjacent support portions 17, tapered surfaces 18 are formed. To use the back side 16 of the lid 3 as a cooking surface, the support portions 17 are brought into engagement with the top edge 19 of the grill body 1. In this state, gaps g exist between the tapered surfaces 18 and the top edge 19 of the grill body 1. Through the gaps g, air is exhausted when the fuel is burned. Simultaneously, air is smoothly introduced into the grill body 1 through the air holes 4. Fuel can thus be burned stably.

When cooking on the barbecue grill is finished, fuel residue is extinguished. For this purpose, the handles 9 are inserted into the respective holes 8 in the grill body 1, and the grill body 1 is lifted from the pan 2 by holding the handles 9, horizontally turned by 45°, and lowered onto the pan 2 to hermetically close the air holes 4 with the protrusions 5 of the pan 2. Then, the lid 3 is turned over so that the back side 16 faces down. In this state, the interior of the grill body 1, is completely isolated, so that the fuel residue is quickly extinguished, and thus can be disposed of easily.

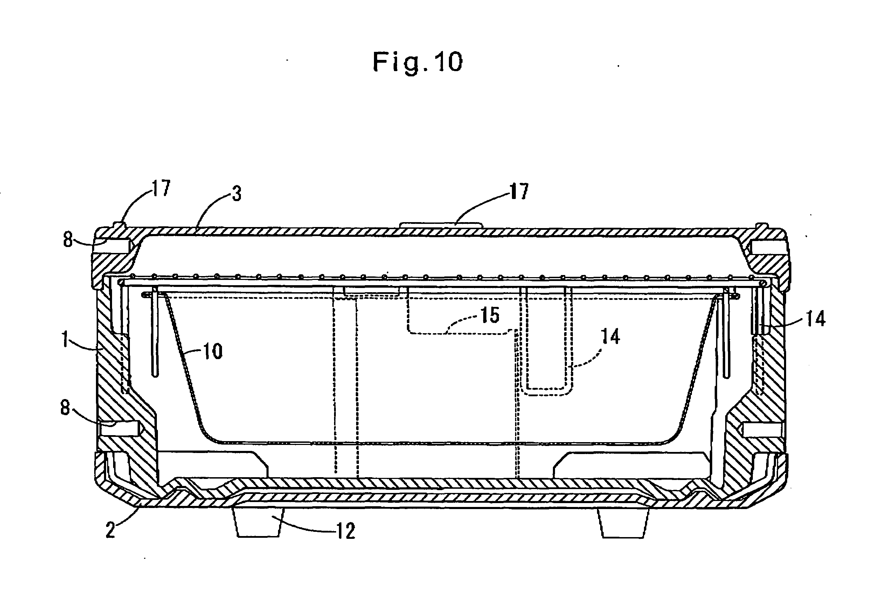

As shown in Figs. 9 and 10, the charcoal support 10 and the gridiron 13 can be nested in the grill body 1 for compact storage and portability of the barbecue grill.

## Claims

1. A barbecue grill comprising a pot-shaped grill body having an open top and formed with an air hole, and a pan having a protrusion, wherein said grill body can be placed on said pan such that said protrusion is received in the air hole, said protrusion and said air hole being sized such that when the protrusion is received in the air hole, the air hole is hermetically closed by the protrusion, and wherein said grill body can be turned horizontally relative to said pan and placed on said pan such that said air hole is circumferentially displaced from said protrusion and thus open.

2. The barbecue grill of claim 1 wherein a plurality of said air holes are arranged along a bottom edge of said grill body at predetermined angular intervals, wherein a plurality of said protrusions are arranged along an edge of said pan at said predetermined angular intervals, wherein said grill body can be turned horizontally relative to said pan by half the predetermined angular interval from the position where said protrusions are received in the respective air holes and placed on said pan such that the respective air holes are open to outside through gaps between the adjacent protrusions.

3. The barbecue grill of claim 1 further comprising a lid for closing the open top of said grill body, thereby preventing passage of air through the open top.

4. The barbecue grill of claim 2 further comprising a lid for closing the open top of said grill body, thereby preventing passage of air through the open top.
